# EUROPÄISCHE PATENTANMELDUNG

(11) **EP 2 014 928 A1**
(43) Veröffentlichungstag der Anmeldung: **14.01.2009**
(21) Anmeldenummer: 08151192.5
(22) Anmeldetag: 08.02.2008
(51) Int. Cl.: F16B 7/18

(54) **Verbindungselement**

(30) Priorität: 06.06.2007 DE 202007007888 U
(71) Anmelder: Horst Witte Entwicklungs- und Vertriebs KG, 21369 Nahrendorf (DE)
(72) Erfinder: Witte, Horst, 21369 Nahrendorf (DE)
(74) Vertreter: Raffay & Fleck

(57) **Zusammenfassung**

Mit der Erfindung soll ein Verbindungselement zum lösbaren Verbinden von zwei Elementen entlang aneinander anliegenden Anlageflächen, welche jeweils T-Nuten aufweisen, die jedenfalls in einem Verbindungsabschnitt einander überdeckend gegenüberliegen, angeben werden, welches flexibel und vielseitig einsetzbar ist und eine sichere und haltbare Verbindung der Elemente miteinander ermöglicht.

Vorgeschlagen wird hierfür ein solches Verbindungselement mit:
i) wenigstens zwei im Querschnitt jeweils ein H-förmiges Profil und an einander zugewandten Stirnseiten jeweils keilförmig in das Material eingeschnittene Spannflächen (5) aufweisenden, durch ein Spannmittel (11) aufeinander zu verspannbaren Spannstücken (2, 3)
ii) und zwischen den Spannstücken (2, 3) eingespannten, im wesentlichen jeweils einen T-förmigen Querschnitt aufweisenden, im wesentlichen spiegelsymmetrisch entlang einer Längsebene des Verbindungselementes angeordneten Klemmstücken (4),

wobei die Klemmstücke (4) schräg geschnittene Stirnflächen (6) aufweisen und ihre längste Erstreckung jeweils an einer Fläche haben, die dem gegenüberliegenden Klemmstück (4) zugewandt ist, und wobei die Klemmstücke (4) zusammen gesehen eine geringere Höhe aufweisen als die Spannstücke (2, 3), so dass bei einem Verspannen der Spannstücke (2, 3) aufeinander zu die Klemmstücke (4) aufgrund des Zusammenwirkens ihrer schrägen Stirnflächen (6) mit den Spannflächen (5) aufeinander zu gezwungen und mit einander gegenüberliegenden Klemmflächen (10) an Hinterschnitte in den jeweiligen T-Nuten der zu verbindenden Elemente angepresst werden.

## Beschreibung

### Technisches Gebiet

Die Erfindung betrifft ein Verbindungselement zum lösbaren Verbinden von zwei Elementen entlang aneinander anliegenden Anlageflächen, welche jeweils T-Nuten aufweisen, die jedenfalls in einem Verbindungsabschnitt einander überdeckend gegenüberliegen.

### Stand der Technik

Insbesondere im Vorrichtungsbau, hierbei besonders beim Bau von Aufspannvorrichtungen zum lagegenauen Positionieren und Fixieren von komplex geformten, dreidimensionalen Bauteilen, finden vermehrt Elemente Verwendung, die mit entlang deren Oberflächen geführten T-Nuten ausgestattet sind. Zum Aufbau von zusammengesetzten Strukturen, beispielsweise den oben genannten Aufspannvorrichtungen, müssen diese Elemente miteinander verbunden werden. Hierfür werden heute typischerweise sogenannte Nutensteine eingesetzt, die jedoch ein Einsetzen von oben in die T-Nut voraussetzen und ein in dieser Richtung wirkendes Spannmittel erfordern. Mit anderen Worten ist hier stets für eine Zugänglichkeit der T-Nut bzw. des Spannmittels zum Fixieren des Nutensteins von oben Sorge zu tragen, was die Verbindung hinsichtlich der Flexibilität deutlich beschränkt.

### Darstellung der Erfindung

Entsprechend besteht ein Bedarf nach einem Verbindungselement zum lösbaren Verbinden von zwei Elementen entlang aneinander anliegender Anlageflächen mit darin ausgebildeten T-Nuten, welches flexibel und vielseitig einsetzbar ist und eine sichere und haltbare Verbindung der Elemente miteinander ermöglicht. Ein solches Element wird mit der vorliegenden Erfindung angegeben.

Die vorgenannte Aufgabe wird also gelöst durch ein Verbindungselement mit den Merkmalen des Anspruches 1. Vorteilhafte Weiterbildungen eines solchen Elementes sind in den abhängigen Ansprüchen 2 bis 7 angegeben.

Die grundsätzliche Idee des erfindungsgemäßen Verbindungselementes liegt darin, die Klemmstücke zwischen Spannstücken so anzuordnen, dass sie durch ein gegeneinander Verspannen der Spannstücke in Längsrichtung des Verbindungselementes auf einander zu bewegt werden, wobei sie mit ihren Klemmflächen eine aufeinander zu gerichtete Kraft auf den Hinterschnitt der jeweiligen T-Nut, in welcher sie sitzen, ausüben. Hierzu sind z.B. V-förmig ausgeschnittene Spannflächen der Spannstücke vorgesehen, die mit entsprechend ausgebildeten Abschrägungen an den Stirnseiten der Klemmstücke zusammenwirken. Das erfindungsgemäße Verbindungselement ist insgesamt im Querschnitt im Wesentlichen H-förmig gebildet und kann so in seiner Längsrichtung in zwei entsprechend ausgebildete, einander gegenüberliegende T-Nuten von zwei miteinander zu verbindenden Elementen eingeschoben werden. Da das Spannmittel, z.B. eine Spannschraube, das Klemmstück in der Regel in dessen Längsrichtung durchragt, läuft auch dieses damit in Richtung des Längsverlaufs der T-Nut und ist insoweit auch dann von außen zugänglich, wenn das Verbindungselement vollständig zwischen zwei miteinander zu verbindenden Elementen eingesetzt ist. In einem solchen Falle wäre ein Nutenstein von oben her gerade nicht mehr zu erreichen, hier wäre ein Verbinden nicht möglich.

Die mittels des erfindungsgemäßen Verbindungselementes auf die miteinander zu verbindenden Elemente, genauer auf die Hinterschnitte in den einander gegenüberliegenden T-Nuten ausgeübten Klemmkräfte konzentrieren sich im Wesentlichen im Bereich der Klemmflächen der Klemmstücke. Bei einer größeren Längserstreckung der Klemmstücke wird sich ein Kraftverlauf ergeben, der im Wesentlichen hohe Klemmkräfte in den Bereichen bewirkt, in denen die Spannelemente an den Klemmstücken anliegen, im mittleren Bereich der Klemmstücke werden die Klemmkräfte entsprechend geringer ausfallen. Um insoweit auch bei Verbindungselementen mit höherer Längsausdehnung eine möglichst gute Verteilung der Klemmkräfte zu erzielen, kann das Verbindungselement mit Vorteil wie in Anspruch 2 angegeben ausgebildet sein. Durch das wenigstens eine Zwischenstück können zum einen kürzere Klemmstücke realisiert werden, zum anderen werden hohe Klemmkräfte nicht nur im Bereich des Eingriffs zwischen Spannstück und Klemmstück, sondern auch im Bereich der Übergänge zwischen Klemmstücken und Zwischenstück erreicht. Hier wird also eine Verteilung der Klemmkräfte erreicht, die mehrere Kraftmaxima vorsieht und insoweit eine besonders gute Verbindung zwischen miteinander zu verbindenden Elementen über eine längere Distanz schafft. Hierbei ist sicherlich klar, dass grundsätzlich eine beliebige Anzahl von Zwischenstücken vorgesehen werden kann, wobei zu bevorzugen ist, bei immer länger werdenden Verbindungselementen mehrere Zwischenstücke anzuordnen.

Da in den miteinander zu verbindenden Elmenten die T-Nuten häufig nicht eine exakt rechteckige Form aufweisen, sondern einen mehr pilzförmigen Querschnitt, kann es von Vorteil sein, wenn die Spannstücke wie auch die Klemmstücke, ggf. auch die Zwischenstücke, an ihren Querschnitten nach außen abgerundet geformt sind, wie in Anspruch 3 angegeben.

Anders als Nutensteine können die erfindungsgemäßen Verbindungselemente jedenfalls dann, wenn sie einen vollständig H-förmigen Querschnitt aufweisen, nicht ohne weiteres senkrecht von oben in einer T-Nut eingesetzt werden, sondern sind seitlich in diese einzuschieben. Um auch hier eine höhere Flexibilität zu erreichen, insbesondere ein erfindungsgemäßes Verbindungselement senkrecht von oben in einer T-Nut einsetzen zu können, kann das erfindungsgemäße Verbindungselement wie in Anspruch 4 angegeben ausgebildet sein. Durch einen einseitig verkürzten Arm kann das erfindungsgemäße Klemmstück zunächst mit dem diesem Arm auf derselben Seite des "H" bzw. "T"-Profils der jeweiligen Einzelteile gegenüberliegenden, "normalen" Arm in die T-Nut eingeschoben und dann mit den verkürzten Armen durch eine Schwenkbewegung gänzlich in die T-Nut eingebracht werden. Hierbei ist darauf zu achten, dass trotz des verkürzten Armes bei den Klemmstücken noch ausreichend Klemmfläche verbleibt, um die miteinander zu verbindenden Elemente auch im Bereich des verkürzten Armes sicher gegeneinander zu drücken bzw. zu klemmen.

Das Spannmittel kann, wie bereits erwähnt, in einer einfachen Variante eine Spannschraube sein. Diese durchragt z.B. das erfindungsgemäße Verbindungselement entlang einer Mittelachse. Dabei ist es grundsätzlich natürlich möglich, für die Spannschraube ein entsprechendes Gegenstück, also eine Mutter, vorzusehen. Einfacher ist ein erfindungsgemäßes Verbindungselement allerdings dann aufgebaut, wenn in einem der Spannstücke ein Innengewinde ausgebildet ist, in welches das Gewinde der Spannschraube eingreifen kann. Für eine besonders saubere und optisch ansprechende Montage ist es von Vorteil, wenn in dem zweiten Spannstück, welches kein Innengewinde aufweisen muss, eine Senkbohrung vorgesehen ist zum Versenken des Schraubenkopfes der Spannschraube.

Kurze Beschreibung der Abbildungen der Zeichnungen

Weitere Merkmale und Vorteile der Erfindung ergeben sich aus der nachfolgenden Beschreibung eines Ausführungsbeispiels anhand der beigefügten Figuren. Dabei zeigen:

Fig. 1 ein erfindungsgemäßes Verbindungselement zum lösbaren Verbinden zweier Elemente entlang derer T-Nuten durch Klemmwirkung in einer Explosionsdarstellung (ohne einen zu diesem Element gehöriger Spannschraube);

Fig. 2 eine Explosionsdarstellung eines erfindungsgemäßen Verbindungselementes mit verkürzten Spannstücken in einer gegenüber der Darstellung in Fig. 1 um 90° um die Längsachse gedrehten Seitenansicht;

Fig. 3 in zwei Ansichten a) und b) eine prinzipielle Darstellung der Funktionsweise des erfindungsgemäßen Verbindungselementes;

Fig. 4 in einer Ansicht von vorn ein in zwei T-Nuten von miteinander zu verbindenden Elementen eingeführtes erfindungsgemäßes Verbindungselement;

Fig. 5 in einer Explosionsdarstellung eine weitere Ausgestaltungsvariante eines erfindungsgemäßen Verbindungselementes mit einem zusätzlichen Zwischenstück und zwei durch einander gegenüberliegende Klemmstücke gebildeten Klemmabschnitten;

Fig. 6 in einer Explosionsdarstellung (ohne Spannschraube) eine um weitere Zwischenstücke und Klemmstücke erweiterte Variante eines erfindungsgemäßen Verbindungselementes;

Fig. 7 eine weitere Ausführungsvariante eines erfindungsgemäßen Verbindungselementes mit verkürzten Arm zum Einführen in eine T-Nut senkrecht von oben und

Fig. 8 in einer Prinzipdarstellung die Funktion des Einführens des in Fig. 7 dargestellten Verbindungselementes in eine T-Nut senkrecht von oben.

### Weg(e) zur Ausführung der Erfindung

In den Figuren sind unterschiedliche Ausführungsbeispiele von erfindungsgemäßen Verbindungselementen zum Verbinden von an Anlageflächen jeweils T-Nuten aufweisenden Elementen schematisch dargestellt. Die Figuren dienen zusammen mit der Beschreibung der Erläuterung der Erfindung und sollen den Umfang nicht beschränken. Insbesondere sind die Figuren schematische Darstellungen und nicht zwingend detail- und maßstabsgerecht.

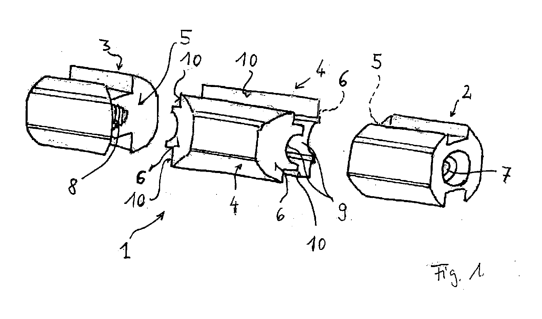

In Figur 1 ist ein erfindungsgemäßes Verbindungselement 1 in Explosionsdarstellung gezeigt. Dieses Verbindungselement 1 dient der Herstellung einer lösbaren Klemmverbindung zwischen zwei parallel zu einander entlang ausgerichteter T-Nuten zu verbindender Elemente. Das Verbindungselement 1 setzt sich zusammen aus zwei Spannstücken 2 und 3, die einen im Querschnitt H-förmiges Profil aufweisen, sowie zwei im Wesentlichen identisch ausgebildeten, im Querschnitt im Wesentlichen T-förmigen Klemmstücken 4 und einem (in dieser Figur nicht dargestellten) Spannbolzen. Die Spannstücke 2 und 3 weisen an ihren einander zugewandten Stirnseiten jeweils keilförmig von den Außenseiten her ins Innere des Materials geführte Spannflächen 5 auf, die durch zwei schräg zu der Querschnittsfläche stehende, gegenüber der Querschnittsfläche jeweils um eine den "Querbalken" des H senkrecht schneidende und eine Symetrieachse für den Querschnitt bildende Achse gedrehte Ebenen gebildet sind, die sich in einem Scheitel auf der oben genannten Symetrieachse treffen.

Die Spannstücke 4 sind gebildet durch zwei in der Mitte des "Querbalkens" des H getrennte Abschnitte des Profilelementes, wobei der jeweils verbleibende Rest des "Querbalkens" des H noch einmal verkürzt wurde. Sie sind an ihren Stirnseiten mit zu den Spannflächen 5 der Spannstücke 2 und 3 korrespondierenden, in umgekehrter Richtung verlaufenden Abschrägungen 6 versehen. Wenn die in Figur 1 in Explosionsdarstellung gezeigten Elemente zusammengefügt sind und eine Spannschraube durch die Öffnung 7 in dem Spannstück 2, zwischen den Klemmstücken 4 in das Gewinde 8 des Spannstückes 3 eingeführt ist, so werden die Spannstücke 4 zum einen durch das Zusammenwirken der Klemmflächen 5 mit den Abschrägungen 6, zum anderen durch die Führung der hier nicht gezeigten Spannschraube in den Hohlkehlen 9 in einer Position zwischen den Spannstücken 2 und 3 gehalten. Bei einem weiteren Festziehen der Spannschraube werden die Spannstücke 2 und 3 aufeinander zu bewegt, wobei durch das Zusammenwirken der keilförmigen Spannflächen 5 und der Abschrägungen 6 die beiden Klemmstücke 4 gegeneinander bewegt werden. Ist ein in Figur 1 dargestelltes Verbindungselement 1 dann in zwei einander parallel gegenüber liegende T-Nuten zweier miteinander zu verbindender Elemente eingeführt, werden beim Festziehen des Bolzens die an den Klemmstücken 4 ausgebildeten Klemmflächen 10 gegen die entsprechenden Hinterschnitte in den T-Nuten gepresst und die beiden miteinander zu verbindenden Elemente so kraftschlüssig miteinander verbunden. Zum Lösen einer so geschaffenen Verbindung wird einfach die Spannschraube wieder gelöst, wodurch die Spannstücke 2 und 3 auseinander bewegt werden und so auch die Klemmstücke 4 sich wieder von einander lösen können. Die Klemmflächen 10 liegen nun nicht mehr unter Kraftschluss an den Hinterschnitten der jeweiligen T-Nuten an, und das Verbindungselement 1 kann so gelöst und entnommen werden.

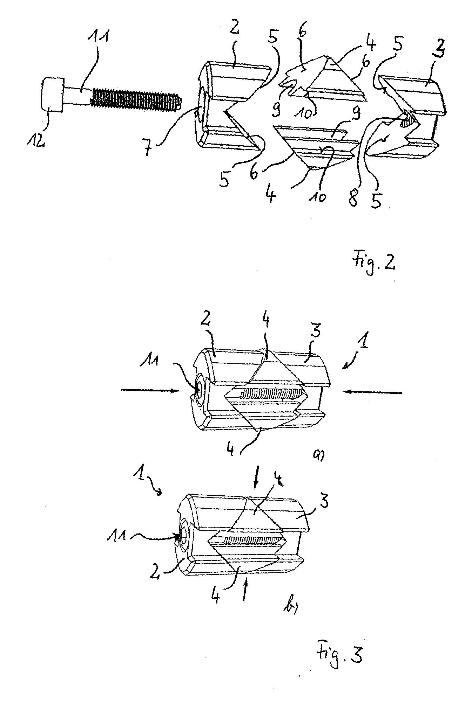

In Fig. 2 ist in einer Explosionsdarstellung ein gegenüber dem in Fig. 1 dargestellten Verbindungselement verkürzt gestaltetes, ansonsten gleich gebildetes Verbindungselement dargestellt, wobei in dieser Darstellung auch die Spannschraube 11 mit einem Schraubenkopf 12 mit in der Figur enthalten ist. Die Darstellung ist hier um 90° um die Längsachse des Verbindungselementes verkippt, um einzelne der Strukturen in anderer Ansicht darzustellen.

In den Figuren 3a und b ist prinzipiell und schematisch die Wirkweise eines erfindungsgemäßen Verbindungselementes 1 gezeigt. Durch Festziehen der Verbindungsschraube 11 in dem Gewinde 8 werden die beiden Spannstücke 2 und 3 aufeinander zu bewegt, wie dies durch Pfeile in Fig. 3a angedeutet ist. Dadurch rutschen die Abschrägungen 6 an den Klemmstücken 4 entlang der V-förmigen Spannflächen an den Spannstücken 2 und 3 entlang, so dass die Klemmstücke 4 aufeinander zu bewegt werden. Dies ist in Fig. 3b durch entsprechende Pfeile angedeutet, hierbei ist auch zu erkennen, dass die Klemmstücke 4 verglichen mit der Position in Fig. 3a eine näher aufeinander zu bewegte Position einnehmen.

In dieser Darstellung der Figuren 3a und 3b ist auch gut zu erkennen, dass die Klemmstücke zusammen genommen eine geringere Höhe aufweisen als die Spannstücke (gemessen entlang der Erstreckung des Querbalkens des "H"). Dies ist nötig, damit die Klemmstücke sich soweit aufeinander zu bewegen können, dass ihr Abstand geringer wird als die Erstreckung des Querbalkens des "H" im Profil der Spannstücke. Nur so kann eine entsprechende Klemmkraft auf die miteinander zu verbindenden Elemente ausgeübt werden. Ferner ist hier gut zu erkennen, dass die Spannschraube 11 im Wesentlichen entlang einer Längs- und Symmetrieachse des Verbindungselementes 11 verläuft und im Bereich der Klemmstücke 4 in den Hohlkehlen 9 liegt.

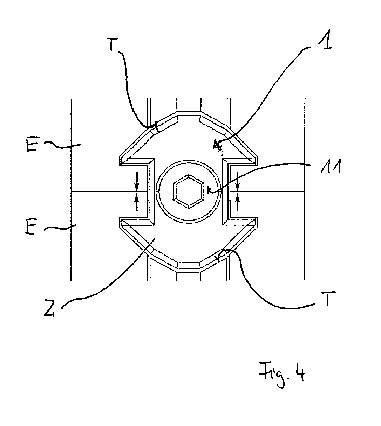

In Fig. 4 ist in einer weiteren schematischen Darstellung die Funktionsweise des erfindungsgemäßen Verbindungselementes 1 noch einmal verdeutlicht. Hier sind schematisch zwei aneinander mit aufeinander zugewandten Anlageflächen anliegende Elemente E dargestellt, die in der Anlagefläche jeweils eine T-Nut T aufweisen. Das erfindungsgemäße Verbindungselement 1 ist in beide T-Nuten T eingeführt, wobei hier eine Aufsicht auf die äußere Stirnfläche des Klemmstückes 2 mit darin in der Senkbohrung 7 versenkter Klemmschraube 11 dargestellt ist. Durch Anziehen der Klemmschraube 11 werden die Spannstücke aufeinander zu bewegt, und es entsteht eine hier durch Pfeile angedeutete Klemmkraft, die auf die Hinterschnitte der T-Nuten T wirkt und die beiden Elemente E miteinander verpresst und durch Verklemmen verbindet.

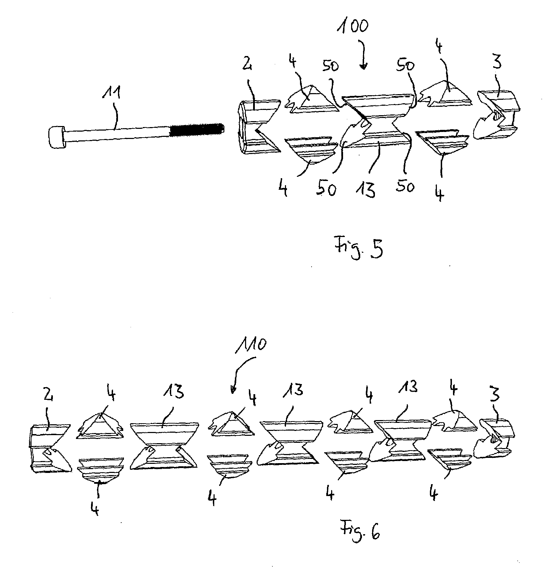

In den Figuren 5 und 6 sind erweiterte Ausgestaltungsvarianten erfindungsgemäßer Verbindungselemente 100 bis 110 gezeigt. Diese unterscheiden sich von einem in den Figuren 1 bis 4 gezeigten einfachen Element dadurch, dass sie zusätzlich zu den Spannstücken 2 und 3 und zwei zwischen diesen einsetzten Klemmstücken 4 ein (Fig. 5) bzw. mehrere (Fig. 6) Zwischenstück(e) 13 aufweisen. Diese Zwischenstücke 13 sind von H-förmigem Querschnitt, der im Wesentlichen dem Querschnitt der Spannstücke 2, 3 gleicht. An beiden einander gegenüberliegenden Stirnflächen weisen die Zwischenstücke 13 V-förmige Einschnitte auf mit jeweils schräg verlaufenden Spannflächen 50, wobei diese Einschnitte im Wesentlichen den durch die Spannflächen 5 gebildeten V-förmigen Einschnitten in den Spannstücken 2 und 3 entsprechen. Diese Zwischenstücke 13 bewirken, dass insbesondere bei verlängerten Verbindungselementen 100 bzw. 110 hohe Klemmkräfte nicht nur an den in Längsrichtung gesehen vorderen und hinteren Abschnitten entsprechend langgestreckter Klemmelemente 4 aufgebracht werden können, sondern auf mehrere Klemmelemente 4 entlang der Längserstreckung des Verbindungselementes. Somit können im Wesentlichen über die gesamte Länge des Verbindungselementes auch dann im Wesentlichen gleichmäßige Klemmkräfte aufgebracht werden, wenn die Verbindungselemente von längerer Ausdehnung sind. Wie in Fig. 6 angedeutet, ist klar, dass Verbindungselemente durch Vorsehen einer Vielzahl von Zwischenstücken 13 grundsätzlich beliebig verlängerbar und modular aufbaubar sind. Wichtig ist hier nur, dass entsprechend in der Länge angepasste Schraubbolzen 11 Verwendung finden.

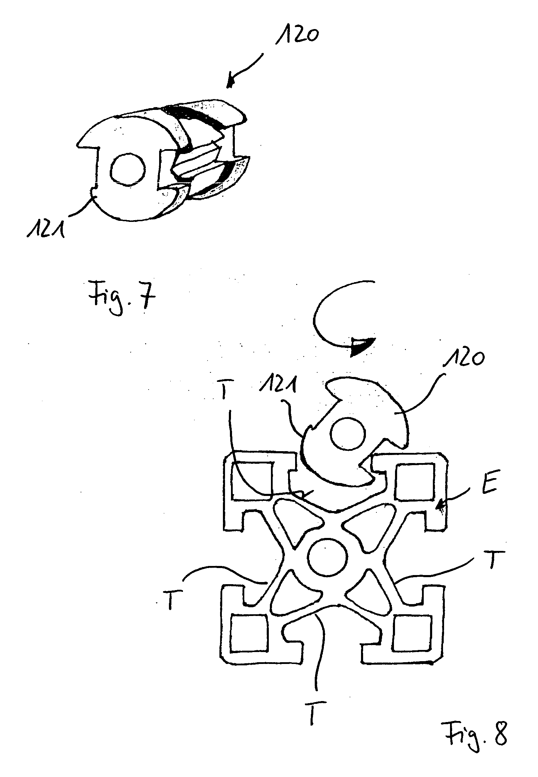

Eine weitere Ausgestaltungsvariante eines erfindungsgemäßen Verbindungselementes ist schließlich in den Figuren 7 und 8 dargestellt. Das in Fig. 7 dargestellte Verbindungselement 120 ist anders als die zuvor dargestellten Verbindungselemente 1, 100, 110 nicht mehr entlang einer Mittelebene spiegelsymmetrisch, sondern weist auf einer Seite einen verkürzten Arm 121 auf. In diesen Figuren ist der verkürzte Arm 121 nur zu erkennen in einem der Spannstücke, der verkürzte Arm 121 ist jedoch auch bei dem auf dieser Seite gelegenen Klemmstück und auch bei dem zweiten Spannstück vorhanden. Wichtig ist, dass insbesondere das zugehörige Klemmstück trotz des verkürzten Armes 121 nach wie vor eine Klemmfläche aufweist, die mit dem entsprechenden Hinterschnitt der T-Nut, in der dieses Klemmstück zu liegen kommt, zusammenwirken und eine Klemmkraft auf diesen ausüben kann.

In Fig. 8 ist dargestellt, wozu die in Fig. 7 gezeigte Ausgestaltung nützlich ist. So kann ein solchermaßen mit einem verkürzten Arm 121 ausgebildetes Verbindungselemente 120 senkrecht von oben in eine T-Nut T eingesetzt werden, was mit den in den vorherigen Figuren dargestellten Verbindungselementen nicht möglich ist. Hierzu wird wie in der Fig. 8 dargestellt das Verbindungselement 120 mit dem dem verkürzten Arm 121 gegenüberliegenden, "normallang" ausgebildeten Arm zunächst in den Hinterschnitt der T-Nut T eingeführt und dann mit dem verkürzten Arm 121 eingeschwenkt. Dieser kann dabei an dem entsprechenden Hinterschnitt der T-Nut T vorbei gleiten, so dass das Verbindungselement 120 dann insgesamt in der T-Nut sitzt. Nun muss das Verbindungselement 120 nur noch so ausgerichtet werden, dass die Klemmfläche des Klemmstückes (ggf. der Klemmstücke, wenn auch ein mit einem ebenfalls verkürzten Arm 121 ausgebildetes Zwischenstück vorhanden ist) an dem korrespondierenden Hinterschnitt der T-Nut T angreifen und Klemmkräfte auf dieses ausüben kann.

Eine solche Ausgestaltung ist insbesondere dann von Vorteil, wenn ein seitliches Einschieben des Verbindungselementes in die T-Nut aus bautechnischen Gründen nicht möglich bzw. nur sehr schwer zu erzielen ist.

Die obige Beschreibung von Ausführungsbeispielen soll den Umfang der Erfindung nicht beschränken, der in seiner allgemeinen Fassung in den nachfolgenden Ansprüchen festgehalten ist.

**Bezugszeichenliste**

1 Verbindungselement

2 Spannstück

3 Spannstück

4 Klemmstück

5 Spannfläche

6 Abschrägung

7 Öffnung

8 Gewinde

9 Hohlkehle

10 Klemmflächen

11 Spannschraube

12 Schraubenkopf

13 Zwischenstück

50 Spannfläche

100 Verbindungselement

110 Verbindungselement

120 Verbindungselement

121 verkürzter Arm

E Element

T T-Nut

## Patentansprüche

1. Verbindungselement zum lösbaren Verbinden von zwei Elementen (E) entlang aneinander anliegenden Anlageflächen, welche jeweils T-Nuten (T) aufweisen, die jedenfalls in einem Verbindungsabschnitt einander überdeckend gegenüberliegen, mit:
- wenigstens zwei im Querschnitt jeweils ein H-förmiges Profil und an einander zugewandten Stirnseiten jeweils keilförmig in das Material eingeschnittene Spannflächen (5) aufweisenden, durch ein Spannmittel (11) aufeinander zu verspannbaren Spannstücken (2, 3)
- und zwischen den Spannstücken (2, 3) eingespannten, im wesentlichen jeweils einen T-förmigen Querschnitt aufweisenden, im wesentlichen spiegelsymmetrisch entlang einer Längsebene des Verbindungselementes angeordneten Klemmstücken (4),
wobei die Klemmstücke (4) schräg geschnittene Stirnflächen (6) aufweisen und ihre längste Erstreckung jeweils an einer Fläche haben, die dem gegenüberliegenden Klemmstück (4) zugewandt ist, und wobei die Klemmstücke (4) zusammen gesehen eine geringere Höhe aufweisen als die Spannstücke (2, 3), so dass bei einem Verspannen der Spannstücke (2, 3) aufeinander zu die Klemmstücke (4) aufgrund des Zusammenwirkens ihrer schrägen Stirnflächen (6) mit den Spannflächen (5) aufeinander zu gezwungen und mit einander gegenüberliegenden Klemmflächen (10) an Hinterschnitte in den jeweiligen T-Nuten (T) der zu verbindenden Elemente (E) angepresst werden.

2. Verbindungselement nach Anspruch 1, **dadurch gekennzeichnet, dass** es zusätzlich wenigstens ein Zwischenstück (13) aufweist mit an beiden Stirnseiten jeweils keilförmig in das Material eingeschnittenen Spannflächen (50), die korrespondierend zu den schräg geschnittenen Stirnflächen (6) angrenzender Klemmelemente (4) gebildet sind.

3. Verbindungselement nach einem der vorhergehenden Ansprüche, **dadurch gekennzeichnet, dass** die Spannstücke und die Klemmstücke sowie gegebenenfalls das oder die Zwischenstück(e) an ihren Querstrukturen des H-bzw. T-förmigen Querschnittes nach außen abgerundet geformt sind.

4. Verbindungselement nach einem der vorhergehenden Ansprüche, **dadurch gekennzeichnet, dass** die Spannstücke (2, 3) wenigstens auf einer Seite des Mittelsteges des H-förmigen Querschnittes an einem dort abstehenden Arm (121) sowie das bzw. die zugehörige(n), auf dieser Seite angeordnete(n) Klemmstück(e) (4) sowie gegebenenfalls das oder die Zwischenstück(e) (13) an dem entsprechenden Arm in einer solchen Weise verkürzt ausgebildet sind, dass das Verbindungselement durch Einführen der diesen verkürzten Armen (121) gegenüberliegenden Arme in die T-Nut (T) und Einschwenken der verkürzten Arme (121) von oben in die T-Nut (T) eingesetzt werden kann und dennoch eine ausreichend große Klemmfläche (10) an dem oder den Klemmstück(en) (4) an dem bzw. den verkürzt ausgebildeten Arm(en) verbleibt, um ein Verklemmen der T-Nut (T) an dem anliegenden Hinterschnitt zu gewährleisten.

5. Verbindungselement nach einem der vorhergehenden Ansprüche, **dadurch gekennzeichnet, dass** das Spannmittel (11) eine durch die Spannstücke (2, 3) und zwischen den Klemmstücken (4) hindurch geführte Spannschraube ist.

6. Verbindungselement nach Anspruch 5, **dadurch gekennzeichnet, dass** in einem ersten der Spannstücke (3) ein Innengewinde (8) ausgebildet ist zum Zusammenwirken mit dem Außengewinde der Spannschraube.

7. Verbindungselement nach einem der Ansprüche 5 oder 6, **dadurch gekennzeichnet, dass** einem zweiten der Spannstücke (2) eine Senkbohrung (8) angeordnet ist zum Versenken des Schraubenkopfes der Spannschraube.
